# FASCICULE DE BREVET EUROPEEN

(11) **EP 2 112 417 B1**
(45) Date de publication et mention de la délivrance du brevet: **02.12.2015**
(21) Numéro de dépôt: 09290286.5
(22) Date de dépôt: 17.04.2009
(51) Int. Cl.: B29C 65/64, B29K 305/02, B29K 305/00, B29C 65/82, F16L 47/24, B29C 65/00, B29K 101/12, B29K 77/00, B29K 105/06, B29K 309/08, B60H 1/00

(54) **Dispositif de raccordement**
Anschlusseinrichtung
Connection device

(30) Priorité: 21.04.2008 FR 0802208
(43) Date de publication de la demande: 28.10.2009
(73) Titulaire: Hutchinson, 75008 Paris (FR)
(72) Inventeur: Mamie, Magalie, 77300 Fontainebleau (FR); Voltz, William, 45120 Corquilleroy (FR); Auclair, Alexandre, 45210 Ferrières en Gâtinais (FR); Bernard, Christophe, 45700 Villemandeur (FR)
(74) Mandataire: Bolinches, Michel Jean-Marie

(56) Documents cités:
- EP-A- 0 493 316
- EP-A- 1 106 899
- DE-U1- 9 310 685
- DE-U1- 29 606 026
- GB-A- 2 408 550
- US-A1- 2005 127 668
- US-A1- 2006 162 144

## Description

La présente invention concerne un procédé d'assemblage d'un dispositif de raccordement étanche pour un circuit véhiculant un fluide sous pression qui est un circuit de climatisation ou de direction assistée pour véhicule automobile.

D'une manière générale, il est connu dans les circuits de climatisation pour véhicules automobile de relier les tubes métalliques (typiquement en aluminium) à des organes de ces circuits via des raccords métalliques, par exemple également en aluminium ou en acier inoxydable.

On a récemment choisi de remplacer certains de ces raccords métalliques par des raccords en matière plastique assemblés sur les tubes métalliques correspondants, comme par exemple décrit dans le document WO-A1-97/47908. Ce document divulgue un dispositif de raccord rapide en particulier pour circuit de climatisation comportant un raccord métallique ou en matière plastique, qui est monté autour d'une zone de raccordement d'un tube métallique présentant un renflement circonférentiel à proximité immédiate duquel un joint d'étanchéité annulaire est surmoulé sur la face interne de ce raccord.

Le dispositif de raccord selon ce document présente une étanchéité et une tenue mécanique relativement satisfaisantes en fonctionnement.

Les documents US 2005/0127668 A1, DE-U1-296 06 026, EP-A-0 493 316, EP-A- 1 106 899 et GB-A-2 408 550 présentent des dispositifs de raccordement pour circuits véhiculant un fluide sous pression, qui comportent chacun un raccord tubulaire polymérique monté autour d'un tube métallique.

Un but de la présente invention est de proposer un procédé d'assemblage d'un dispositif de raccordement étanche pour un circuit véhiculant un fluide sous pression, ce dispositif comportant un raccord tubulaire polymérique qui est monté autour d'une zone de raccordement radialement externe d'un tube métallique inclus dans le dispositif et qui est destiné à être connecté à un organe du circuit, cette zone présentant un renflement circonférentiel contre lequel est monté un joint d'étanchéité également inclus dans le dispositif, pour l'obtention d'un dispositif qui présente notamment une étanchéité et une tenue mécaniques encore améliorées en comparaison de celles procurées par le raccord selon le document WO-A1-97/47908 précité. Ce procédé d'assemblage comprend :
a) le montage du joint contre ce renflement du tube,
b) le positionnement relatif de ladite zone de raccordement du tube axialement le long d'une face radialement interne du raccord, de telle manière que cette zone de raccordement soit entourée par une partie axialement centrale de ladite face radialement interne du raccord, et que deux parties d'extrémité du raccordement soient respectivement montées sur ce renflement et sur une extrémité adjacente du tube,

A cet effet, le procédé d'assemblage selon l'invention est tel qu'il comprend ensuite un soudage par friction circulaire de cette partie centrale du raccord sur cette zone de raccordement du tube, en retrait dudit joint, pour assurer l'étanchéité du dispositif au fluide et pour confiner l'interface de soudage radialement entre le raccord et le tube et axialement entre le joint et ladite partie d'extrémité du raccordement qui est montée sur l'extrémité adjacente du tube, ce procédé comprenant en outre la connexion du raccord ainsi soudé à un organe d'un circuit de climatisation ou de direction assistée pour véhicule automobile, et ce procédé est tel que l'on met en oeuvre ce soudage via une rotation relative du raccord autour du tube sous une pression axiale de soudure de préférence voisine de 3,5 bars puis, lors d'un refroidissement faisant suite à cette rotation, l'exercice d'une pression axiale de maintien de préférence voisine de 4 bars.

Egalement avantageusement, l'on réalise ce soudage à une vitesse de rotation voisine de 4000 tours/min. et pendant une durée d'environ dix secondes, pour un enfoncement axial du raccord dans le tube d'environ 3 mm, de préférence.

La Demanderesse a en effet vérifié que ce mode de soudage par friction circulaire permet d'obtenir une soudure plus résistante du raccord sur le tube que les autres types de soudages communément employés, tels que le soudage par vibrations, par ultrasons ou « miroir ».

On notera que l'utilisation de ce raccord polymérique permet d'éviter les problèmes de fissuration des raccords métalliques usuellement façonnés par formage, et également d'inclure éventuellement selon les besoins d'autres fonctionnalités dans le raccord (e.g. un capteur de pression).

Selon une autre caractéristique de l'invention, ladite partie d'extrémité de la face interne du raccord qui est montée sur ledit renflement peut avantageusement présenter un diamètre interne maximal pour ce raccord, lequel peut alors présenter un diamètre interne minimal en ladite partie d'extrémité montée sur ladite extrémité du tube.

Selon une autre caractéristique de l'invention, ladite zone de raccordement du tube est avantageusement munie de nervures circonférentielles de retenue (i.e. d'accrochage) au raccord séparées entre elles par des gorges annulaires, lequel raccord peut alors présenter sur ladite partie axialement centrale de sa face interne au moins un renfoncement radial conçu pour coopérer avec ces nervures.

De préférence, lesdites nervures sont sensiblement en forme de queue de sapin, et ladite partie axialement centrale peut présenter une pluralité de renfoncements radiaux, de telle sorte que lesdites gorges soient remplies par ladite interface de soudage.

On notera que ces nervures présentes sur la zone de raccordement du tube associées aux renfoncements radiaux internes du raccord permettent de garantir la tenue mécanique du dispositif de raccordement selon l'invention, et que le remplissage des gorges ménagées entre ces nervures par la matière fondue à l'interface de soudage contribue à éviter toute bavure issue de ce soudage qui pourrait être gênante en fonctionnement ou bien nuire à l'esthétique du raccordement.

Selon un mode de réalisation de l'invention, ladite partie d'extrémité du raccordement montée sur ladite extrémité du tube est formée d'un décrochement radial à paroi cylindrique qui forme une fente axiale annulaire avec ladite partie axialement centrale et qui s'étend partiellement le long de la face radialement interne de ladite extrémité du tube, de sorte à confiner l'interface de soudage radialement entre le raccord et le tube.

Selon un second mode de réalisation de l'invention, ladite extrémité du tube est formée par une extension axiale à paroi cylindrique qui prolonge axialement lesdites nervures et qui s'étend partiellement par sa face radialement externe le long de la partie d'extrémité adjacente du raccordement, de sorte à confiner l'interface de soudage radialement entre le raccord et le tube.

Selon une autre caractéristique de l'invention, le raccord est avantageusement en matière plastique, de préférence en un polymère thermoplastique qui présente en particulier :
- à l'état sec venu de moulage (« dry as molded » ou « DAM ») une contrainte et une élongation à la rupture, mesurées avec un déplacement de 5 mm/min. selon la norme ISO 527-1/-2, respectivement supérieures à 180 MPa et à 2 %, et
- à un taux d'humidité relative de 50 %, une contrainte et une élongation à la rupture, également mesurées avec ce déplacement et selon la même norme ISO 527-1/-2, respectivement supérieures à 130 MPa et à 3 %.

Encore plus préférentiellement, le raccord est à base d'un polyamide 6.6 chargé par des fibres de verre, et le tube est à base d'aluminium.

Dans ce cas, ladite interface de soudage par friction circulaire est alors à base d'un mélange de ladite matière plastique fondue et de poudre d'alumine.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec le dessin joint, dans lequel :
la figure 1 est une vue schématique partielle en section axiale éclatée d'un dispositif de raccordement selon un premier mode de réalisation de l'invention, avant soudage du raccord polymérique sur le tube métallique,
la figure 2 est une vue schématique partielle en section axiale assemblée du dispositif de raccordement de la figure 1 suite à ce soudage,
la figure 3 est une vue schématique partielle en section axiale éclatée d'un dispositif de raccordement selon un second mode de réalisation de l'invention, avant soudage du raccord sur le tube, et
la figure 4 est une vue schématique partielle en section axiale assemblée du dispositif de raccordement de la figure 3 suite à ce soudage.

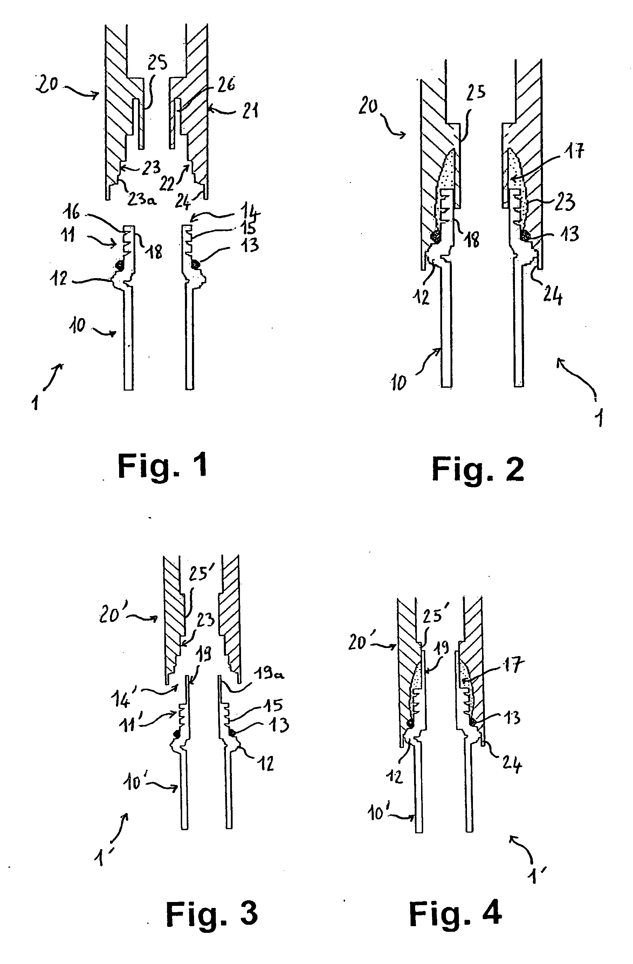

Le dispositif de raccordement 1 des figures 1 et 2 comporte :
- un tube métallique 10 (e.g. en aluminium) présentant une zone de raccordement 11 radialement externe qui est délimitée axialement par un renflement circonférentiel 12 contre lequel est monté un joint d'étanchéité torique 13 et par l'extrémité 14 adjacente du tube 10, et sur laquelle sont formées des nervures circonférentielles 15 d'accrochage au raccord sensiblement en queue de sapin séparées entre elles par des gorges annulaires 16; et
- un raccord tubulaire 20 de préférence en matériau thermoplastique qui est monté autour de la zone de raccordement 11 du tube 10 en étant soudé par friction circulaire sur cette zone 11 (voir figure 2), et qui est destiné à être connecté à un organe du circuit correspondant (non illustré, seule l'extrémité de connexion du raccord 20 avec le tube 10 étant visible sur ces figures).

Plus précisément, le raccord 20 de l'invention présente dans l'exemple des figures 1 et 2 une face radialement externe 21 sensiblement plane, et une face radialement interne 22 comprenant essentiellement :
- une partie axialement centrale 23 qui est soudée par friction circulaire sur la zone de raccordement 11 du tube 10 en retrait du joint 13 et qui présente des renfoncements radiaux 23a (de section par exemple en marches d'escalier) conçus pour coopérer avec les nervures 15 du tube 10 de sorte que ces nervures 15 assurent la tenue mécanique du tube 10 sur le raccord 20 et que les gorges 16 soient remplies par la matière fondue 17 de l'interface de soudage,
- une partie d'extrémité radialement externe 24 du raccordement qui présente un diamètre interne maximal pour l'extrémité de connexion du raccord 20 et qui est destinée à être montée sur le renflement 12, et
- une partie d'extrémité radialement interne 25 du raccordement de diamètre interne minimal pour l'extrémité de connexion du raccord 20, qui est destinée à être montée sur l'extrémité 14 du tube 10 et qui est formée d'un décrochement radial à paroi cylindrique formant une fente axiale annulaire 26 avec la partie centrale 23 et s'étendant partiellement le long de la face interne 18 de l'extrémité 14 du tube 10, pour confiner la matière fondue 17 à l'interface de soudage entre le raccord 20 et le tube 10.

En d'autres termes, le raccord 20 selon les figures 1 et 2 est conçu pour venir enserrer radialement les deux faces interne et externe de la zone de raccordement 11 du tube 10, via la partie centrale 23 et le décrochement 25 du raccord 20, la fente annulaire 26 étant destinée à recevoir lors de sa déformation inhérente au soudage la matière fondue 17, à l'instar de la partie centrale 23.

Le dispositif de raccordement 1' des figures 3 et 4 se différencie uniquement de celui des figures 1 et 2, en ce que :
- l'extrémité 14' du tube 10' concernée par ce raccordement est formée par une extension axiale 19 cylindrique qui prolonge axialement les nervures 15 de ce tube 10' et qui s'étend partiellement par sa face radialement externe 19a le long de la partie d'extrémité radialement interne 25' du raccordement, de sorte à confiner la matière fondue 17 de l'interface de soudage entre le raccord 20' et le tube 10' ; et en ce que
- la partie d'extrémité radialement interne 25' du raccordement, de diamètre interne minimal pour l'extrémité de connexion du raccord 20' et destinée à être montée sur l'extrémité 14' du tube 10', n'est pas conçue pour venir s'étendre le long de la face interne de ce dernier mais au contact de la face externe 19a de l'extension 19.

En d'autres termes, le raccord 20' selon les figures 3 et 4 n'est pas conçu pour venir enserrer radialement les deux faces interne et externe de la zone de raccordement 11' du tube 10', mais seulement pour être appliqué sur la face externe de ce dernier.

Le matériau thermoplastique utilisé pour les raccords 20 et 20' selon les deux modes de réalisation précités est de préférence un polyamide 6.6 chargé à 35 % de fibres de verre, qui présente avantageusement les propriétés mécaniques suivantes :
- à l'état sec venu de moulage (« dry as molded » ou « DAM »), une contrainte et une élongation à la rupture, mesurées avec un déplacement de 5 mm/min. selon la norme ISO 527-1/-2, respectivement de 195 MPa et 2,5 %, et
- à un taux d'humidité relative de 50 %, une contrainte et une élongation à la rupture, également mesurées avec ce même déplacement et selon cette même norme ISO 527-1/-2, respectivement de 140 MPa et 4 %.

L'interface de soudage 17 obtenue par friction circulaire entre ce raccord 20, 20' en polyamide 6.6 chargé de fibres de verre et le tube 10, 10' en aluminium est à base d'un mélange de ce polyamide fondu et de poudre d'alumine. Comme visible aux figures 2 et 4, le dispositif de raccordement 1, 1' selon l'invention permet de confiner cette interface 17, radialement entre le raccord 20, 20' et la zone de raccordement 11, 11' du tube 10, 10' et axialement entre le joint 13 et l'extrémité 14, 14' de ce tube, de sorte à éviter toute bavure issue de la soudure à l'intérieur ou à l'extérieur du raccord.

Quant au joint d'étanchéité 13, il est prévu étanche au fluide circulant dans ce dispositif 1, 1' et compatible avec ce fluide (e.g. un gaz frigorigène tel que le R134a, dans le cas préférentiel d'un circuit de climatisation pour véhicule automobile) et qui est par exemple à base de caoutchouc nitrile hydrogéné (HNBR) ou d'un terpolymère éthylène-propylène-diène (EPDM).

Le soudage par friction circulaire du raccord 20, 20' sur le tube 10, 10' est par exemple mis en oeuvre de la manière suivante, en référence aux deux modes de réalisation précités.

La Demanderesse a réalisé des essais de soudage selon l'invention portant sur ces deux modes de réalisation avec les matériaux préférentiels précités, au moyen d'une machine de dénomination commerciale « MECASONIC » et de modèle « MCRI », à une vitesse de rotation de 4000 tours/min. et pendant une durée d'environ dix secondes. Chaque opération de soudage comprend une rotation du raccord 20, 20' autour du tube 10, 10' sous une pression axiale de soudure de 3,5 bars puis, lors d'un refroidissement faisant suite à cette rotation, l'exercice d'une pression axiale de maintien de 4 bars. Pour chaque soudage réalisé, on a réalisé un enfoncement programmé du raccord 20, 20' dans le tube 10, 10' de Δx = 3 mm dans la direction axiale, l'obtention de ce degré d'enfoncement Δx déterminant l'arrêt de la rotation de la machine.

On a réalisé un test de contrôle de l'étanchéité obtenue pour chacun des deux dispositifs de raccordement 1, 1' des figures 2 et 4, en utilisant de l'hélium à titre de fluide parcourant la canalisation incluant ces dispositifs 1 et 1', lesquels ont été testés initialement puis après un vieillissement thermique de 2 heures à 100° C. La pression interne de cette canalisation était de 25 bars, et la température du fluide et de la pièce était de 20° C. On a maintenu la canalisation en pression pendant 5 minutes, avant de mesurer les débits de fuite à l'aide d'un détecteur d'hélium de dénomination commerciale « INFICON » et de modèle « Ecotec E3000 ».

On a obtenu pour ces dispositifs 1 et 1' testés des débits de fuite d'hélium inférieurs ou égaux à 10⁻⁶ mbar.l/s, ce qui témoigne d'une étanchéité très satisfaisante des dispositifs de raccordement 1 et 1' selon l'invention, qui est notablement améliorée par rapport à celle des dispositifs de raccordement connus à raccords métalliques.

On a en outre réalisé un test de tenue en pression des deux dispositifs de raccordement 1 et 1' en utilisant une canalisation incluant ces dispositifs qui est montée sur un banc de test et dans laquelle on fait circuler une huile. L'enceinte et l'huile étaient à 100° C, le gradient de pression était de 0,1MPa/s, et l'on a maintenu cette canalisation en pression à une pression de non-éclatement de 100 bars pendant 5 minutes, avant de relever la pression d'éclatement maximale.

On a obtenu pour ces dispositifs de raccordement des pressions maximales d'éclatement de 160 bars, ce qui témoigne d'une tenue à la pression de fluide très satisfaisante de ces dispositifs 1 et 1' selon l'invention.

## Revendications

1. Procédé d'assemblage d'un dispositif de raccordement étanche (1, 1') pour un circuit véhiculant un fluide sous pression, ce dispositif comportant un raccord tubulaire (20, 20') polymérique qui est monté autour d'une zone de raccordement (11, 11') radialement externe d'un tube métallique (10, 10') inclus dans le dispositif et qui est destiné à être connecté à un organe du circuit, cette zone présentant un renflement circonférentiel (12) contre lequel est monté un joint d'étanchéité (13) également inclus dans le dispositif, le procédé comprenant :
a) le montage du joint d'étanchéité contre ce renflement du tube,
b) le positionnement relatif de ladite zone de raccordement du tube axialement le long d'une face radialement interne (22) du raccord, de telle manière que cette zone de raccordement soit entourée par une partie axialement centrale (23) de ladite face radialement interne du raccord, et que deux parties d'extrémité (24 et 25, 25') du raccordement soient respectivement montées sur ce renflement et sur une extrémité adjacente (14, 14') du tube,
où le procédé comprend ensuite un soudage par friction circulaire de cette partie centrale du raccord sur cette zone de raccordement du tube, en retrait dudit joint, pour assurer l'étanchéité du dispositif au fluide et pour confiner l'interface de soudage (17) radialement entre le raccord et le tube et axialement entre le joint et ladite partie d'extrémité (25, 25') du raccordement qui est montée sur l'extrémité adjacente du tube, et ce procédé comprend la connexion dudit raccord ainsi soudé à un organe d'un circuit de climatisation ou de direction assistée pour véhicule automobile, et où
l'on met en oeuvre ce soudage via une rotation relative du raccord autour du tube sous une pression axiale de soudure de préférence voisine de 3,5 bars puis, lors d'un refroidissement faisant suite à cette rotation, l'exercice d'une pression axiale de maintien de préférence voisine de 4 bars.

2. Procédé d'assemblage selon la revendication 1, **caractérisé en ce que** l'on réalise ce soudage à une vitesse de rotation voisine de 4000 tours/min. et pendant une durée d'environ dix secondes, pour un enfoncement axial du raccord (20, 20') dans le tube (10, 10') d'environ 3 mm, de préférence.

3. Procédé d'assemblage selon une des revendications précédentes, **caractérisé en ce que** ladite partie d'extrémité (24) de la face interne (22) du raccord (20, 20') qui est montée sur ledit renflement (12) présente un diamètre interne maximal pour ce raccord, lequel présente un diamètre interne minimal en ladite partie d'extrémité (25, 25') montée sur ladite extrémité (14, 14') du tube (10, 10').

4. Procédé d'assemblage selon une des revendications précédentes, **caractérisé en ce que** ladite zone de raccordement (11, 11') du tube (10, 10') est munie de nervures circonférentielles (15) de retenue au raccord (20, 20') séparées entre elles par des gorges annulaires (16), lequel raccord présente sur ladite partie axialement centrale (23) de sa face interne (22) au moins un renfoncement radial (23a) conçu pour coopérer avec ces nervures.

5. Procédé d'assemblage selon la revendication 4, **caractérisé en ce que** lesdites nervures (15) sont sensiblement en forme de queue de sapin, et **en ce que** ladite partie axialement centrale (23) présente une pluralité de renfoncements radiaux (23a), de telle sorte que lesdites gorges (16) soient remplies par ladite interface de soudage (17).

6. Procédé d'assemblage selon une des revendications précédentes, **caractérisé en ce que** ladite partie d'extrémité (25) du raccordement montée sur ladite extrémité (14) du tube (10) est formée d'un décrochement radial (25) à paroi cylindrique qui forme une fente axiale annulaire (26) avec ladite partie axialement centrale (23) et qui s'étend partiellement le long de la face radialement interne (18) de ladite extrémité du tube, de sorte à confiner l'interface de soudage (17) radialement entre le raccord (20) et le tube.

7. Procédé d'assemblage selon la revendication 4 ou 5, **caractérisé en ce que** ladite extrémité (14') du tube (10') est formée par une extension axiale (19) à paroi cylindrique qui prolonge axialement lesdites nervures (15) et qui s'étend partiellement par sa face radialement externe (19a) le long de ladite partie d'extrémité (25') adjacente du raccordement, de sorte à confiner l'interface de soudage (17) radialement entre le raccord (20') et le tube.

8. Procédé d'assemblage selon une des revendications précédentes, **caractérisé en ce que** le raccord (20, 20') est en matière plastique, étant de préférence à base d'un polymère thermoplastique qui présente :
- à l'état sec venu de moulage, une contrainte et une élongation à la rupture, mesurées avec un déplacement de 5 mm/min. selon la norme ISO 527-1/-2, respectivement supérieures à 180 MPa et à 2 %, et
- à un taux d'humidité relative de 50 %, une contrainte et une élongation à la rupture, également mesurées avec ce déplacement et selon cette norme ISO 527-1/-2, respectivement supérieures à 130 MPa et à 3 %.

9. Procédé d'assemblage selon la revendication 8, **caractérisé en ce que** le raccord (20, 20') est à base d'un polyamide 6.6 chargé par des fibres de verre, et **en ce que** le tube (10, 10') est à base d'aluminium.

10. Procédé d'assemblage selon la revendication 9, **caractérisé en ce que** ladite interface de soudage (17) est à base d'un mélange de ladite matière plastique fondue et de poudre d'alumine.

## Patentansprüche

1. Montageverfahren für eine Vorrichtung zum abdichtenden Anschluss (1, 1') für einen ein unter Druck stehendes Fluid fördernden Kreislauf, wobei diese Vorrichtung einen polymeren röhrenförmigen Anschluss (20, 20') umfasst, welcher um eine Anschlusszone (11, 11') radial außerhalb eines metallischen Rohrs (10, 10') angebracht ist, welches in der Vorrichtung enthalten ist und welches dazu bestimmt ist, mit einem Element des Kreislaufs verbunden zu werden, wobei diese Zone eine Umfangsverdickung (12) aufweist, gegen welche eine ebenfalls in der Vorrichtung enthaltene Dichtung (13) montiert ist, wobei das Verfahren umfasst:
a) die Montage der Dichtung gegen die Verdickung des Rohres,
b) die relative Positionierung der Anschlusszone des Rohres axial entlang einer radial inneren Seite (22) des Anschlusses auf solche Weise, dass diese Anschlusszone von einem axial zentralen Abschnitt (23) der radial inneren Seite des Anschlusses umgeben wird und dass zwei Anschlussendabschnitte (24 und 25, 25') jeweils auf dieser Verdickung bzw. einem benachbarten Ende (14, 14') des Rohres montiert sind,
wobei das Verfahren dann ein kreisförmiges Reibschweißen dieses zentralen Abschnitts des Anschlusses auf dieser Anschlusszone des Rohres, im Hintergrund der Dichtung, um die Dichtigkeit der Vorrichtung gegenüber dem Fluid sicherzustellen und um die Schweißschnittstelle (17) radial zwischen dem Anschluss und dem Rohr und axial zwischen der Dichtung und dem Anschlussendabschnitt (25, 25'), welcher auf dem benachbarten Ende des Rohres angebracht ist, einzugrenzen, und diese Verfahren das Verbinden des so geschweißten Anschlusses mit einem Element eines Klimatisierungs- oder Lenkunterstützungskreislaufs für ein Kraftfahrzeug umfasst, und wobei dieses Schweißen ausgeführt wird über eine relative Rotation des Anschlusses um das Rohr unter einem axialen Schweißdruck von bevorzugt nahe 3,5 bar und dann, wenn eine Abkühlung auf diese Rotation folgt, die Ausübung eines axialen Haltedrucks von bevorzugt nahe 4 bar.

2. Montageverfahren nach Anspruch 1, **dadurch gekennzeichnet, dass** diese Schweißen mit einer Rotationsgeschwindigkeit nahe 4000 Umdrehung/Min. und während einer Dauer im Bereich von 10 Sekunden, bevorzugt für ein axiales Eindringen des Anschlusses (20, 20') in dem Rohr (10, 10') im Bereich von 3 mm realisiert wird.

3. Montageverfahren nach einem der vorhergehenden Ansprüche, **dadurch gekennzeichnet, dass** der Endabschnitt (24) der inneren Seite (22) des Anschlusses (20, 20'), welcher auf der Verdickung (12) angebracht ist, einen maximalen inneren Durchmesser für diesen Anschluss aufweist, welcher einen minimalen inneren Durchmesser an dem Endabschnitt (25, 25'), welcher auf dem Ende (14, 14') des Rohres (10, 10') angebracht ist, aufweist.

4. Montageverfahren nach einem der vorhergehenden Ansprüche, **dadurch gekennzeichnet, dass** die Anschlusszone (11, 11') des Rohres (10, 10') mit Umfangsrippen (15) zum Halten an dem Anschluss (20, 20') versehen ist, welche voneinander durch ringförmige Rillen (16) getrennt sind, wobei der Anschluss auf dem axial zentralen Abschnitt (23) seiner internen Seite (22) wenigstens eine radiale Vertiefung (23a) aufweist, welche dazu ausgestaltet ist, mit diesen Rippen zusammenzuwirken.

5. Montageverfahren nach Anspruch 4, **dadurch gekennzeichnet, dass** die Rippen (15) im Wesentlichen in Form einer Tannenbaumspitze sind, und dass dieser axial zentrale Abschnitt (23) eine Vielzahl von radialen Vertiefungen (23a) aufweist, sodass die Rillen (16) von der Schweißschnittstelle (17) gefüllt sind.

6. Montageverfahren nach einem der vorhergehenden Ansprüche, **dadurch gekennzeichnet, dass** der Anschlussendabschnitt (25), welcher auf dem Ende (14) des Rohres (10) montiert ist, gebildet ist durch einen radialen Absatz (25) mit zylindrischer Wand, welcher einen ringförmigen axialen Spalt (26) mit dem axial zentralen Abschnitt (22) bildet, und welcher sich teilweise entlang der radial inneren Seite (18) des Endes des Rohres erstreckt, sodass die Schweißschnittstelle (17) radial zwischen dem Anschluss (20) und dem Rohr eingeschlossen wird.

7. Montageverfahren nach Anspruch 4 oder 5, **dadurch gekennzeichnet, dass** das Ende (14') des Rohres (10') gebildet ist durch eine axiale Verlängerung (19) mit zylindrischer Wand, welche die Rippen (15) axial verlängert und welche sich teilweise durch ihre radial äußere Seite (19a) entlang des Endabschnitts (25') benachbart zu dem Anschluss erstreckt, sodass die Schweißschnittstelle (17) radial zwischen dem Anschluss (20') und dem Rohr eingeschlossen wird.

8. Montageverfahren nach einem der vorhergehenden Ansprüche, **dadurch gekennzeichnet, dass** der Anschluss (20, 20') aus Kunststoffmaterial ist, welches bevorzugt auf Basis eines thermoplastischen Polymers ist, welches aufweist:
- im aus der Formung kommenden trockenen Zustand eine Spannung und eine Reißdehnung, gemessen mit einer Verlagerung von 5 mm/Min. gemäß der Norm ISO 527-/-2, von größer als 100 MPa bzw. 2%, und
- bei einer relativen Feuchtigkeit von 50% eine Spannung und eine Reißdehnung, ebenfalls gemessen mit dieser Verlagerung und gemäß dieser Norm ISO 527-1/-2, von größer als 130 MPa bzw. 3%.

9. Montageverfahren nach Anspruch 8, **dadurch gekennzeichnet, dass** der Anschluss (20, 20') auf Basis eines mit Glasfasern gefüllten 6.6-Polyamids ist und dass das Rohr (10, 10') auf Basis von Aluminium ist.

## Claims

1. Assembly method for a fluid-tight connection device (1, 1') for a circuit carrying a fluid under pressure, the device comprising a polymeric tubular connector (20, 20') which is mounted around a radially outer connection zone (11, 11') of a metal tube (10, 10') included in the device, and which is to be connected to an element of the circuit, the zone having a circumferential swelling (12) against which there is mounted a seal (13) likewise included in the device, the method comprising:
a) mounting the seal against this swelling of the tube,
b) mutually positioning said connection zone of the tube axially along a radially inner face (22) of the connector, in such a manner that this connection zone is surrounded by an axially central portion (23) of said radially inner face of the connector, and that two end portions (24 and 25, 25') of this connection are mounted on this swelling and on an adjacent end (14, 14') of the tube, respectively,
wherein the method then comprises rotational friction welding of this central portion of the connector to this connection zone of the tube, set back from said seal, in order to ensure that the device is fluid-tight and to confine the weld interface (17) radially between the connector and the tube and axially between the seal and said end portion (25, 25') of the connection which is mounted on the adjacent end of the tube, and the method comprises connecting said connector so welded to an element of an air conditioning or power steering circuit for a motor vehicle, and wherein
this welding is carried out by mutually rotating the connector about the tube under an axial welding pressure of preferably close to 3.5 bar and then, during a cooling following this rotation, exerting an axial holding pressure of preferably close to 4 bar.

2. Assembly method according to claim 1, **characterised in that** this welding is carried out at a speed of rotation close to 4000 rpm and for a period of approximately ten seconds, in order to sink the connector (20, 20') axially into the tube (10, 10') preferably by approximately 3 mm.

3. Assembly method according to any one of the preceding claims, **characterised in that** said end portion (24) of the inner face (22) of the connector (20, 20') which is mounted on said swelling (12) has a maximum inside diameter for the connector, which has a minimum inside diameter in said end portion (25, 25') mounted on said end (14, 14') of the tube (10, 10').

4. Assembly method according to any one of the preceding claims, **characterised in that** said connection zone (11, 11') of the tube (10, 10') is provided with circumferential ribs (15) for retaining on the connector (20, 20'), which ribs are separated from one another by annular grooves (16), which connector has on said axially central portion (23) of its inner face (22) at least one radial indentation (23a) designed to cooperate with these ribs.

5. Assembly method according to claim 4, **characterised in that** said ribs (15) are substantially fir-tree shaped, and **in that** said axially central portion (23) has a plurality of radial indentations (23a) so that said grooves (16) are filled by said weld interface (17).

6. Assembly method according to any one of the preceding claims, **characterised in that** said end portion (25) of the connection that is mounted on said end (14) of the tube (10) is formed by a radial step (25) having a cylindrical wall which forms an annular axial slot (26) with said axially central portion (23) and which extends partially along the radially inner face (18) of said end of the tube, so as to confine the weld interface (17) radially between the connector (20) and the tube.

7. Assembly method according to claim 4 or 5, **characterised in that** said end (14') of the tube (10') is formed by an axial extension (19) having a cylindrical wall which prolongs said ribs (15) axially and which extends partially by its radially outer face (19a) along said adjacent end portion (25') of the connection, so as to confine the weld interface (17) radially between the connector (20') and the tube.

8. Assembly method according to any one of the preceding claims, **characterised in that** the connector (20, 20') is made of plastics material, preferably being based on a thermoplastic polymer having:
- in the dry moulded state, a stress and elongation at break, measured with a displacement of 5 mm/minute in accordance with standard ISO 527-1/-2, greater than 180 MPa and 2%, respectively, and
- at a relative humidity of 50%, a stress and elongation at break, likewise measured with that displacement and in accordance with standard ISO 527-1/-2, greater than 130 MPa and 3%, respectively.

9. Assembly method according to claim 8, **characterised in that** the connector (20, 20') is based on a polyamide 6.6 filled with glass fibres, and **in that** the tube (10, 10') is based on aluminium.
